# EUROPEAN PATENT APPLICATION

(11) **EP 2 277 778 A2**
(43) Date of publication of application: **26.01.2011**
(21) Application number: 10161536.7
(22) Date of filing: 29.04.2010
(51) Int. Cl.: B64F 5/00, G07C 5/00

(54) **Vehicle health management systems and methods with predicted diagnostic indicators**

(30) Priority: 09.07.2009 US 500357
(71) Applicant: Honeywell International Inc., Morristown, NJ 07962 (US)
(72) Inventor: Hadden, George Daniel, Morristown, NJ 07962-2245 (US); Magnuson, Randy R., Morristown, NJ 07962-2245 (US); Barton, Bradley John, Morristown, NJ 07962-2245 (US); Shao, Qingqiu Ginger, Morristown, NJ 07962-2245 (US)
(74) Representative: Buckley, Guy Julian

(57) **Abstract**

A system for monitoring the health of a component includes a memory configured to store a health management system for evaluating the health of the component. The health management system includes a first prognostic module, a first diagnostic module, a first failure mode module, and a first functional module. A processor is coupled to the memory and configured to retrieve the health management system from the memory; receive a first prognostic indicator associated with the health of the component; determine a first predicted diagnostic indicator based on the prognostic indicator with the prognostic module; determine a first failure mode probability based on the first predicted diagnostic indicator with the diagnostic module; determine a first failure mode vector based on the first failure mode probability with the failure mode module; and generate a first functional output based on the first failure mode vector with the first functional mode module.

## Description

### STATEMENT REGARDING FEDERALLY SPONSORED RESEARCH OR DEVELOPMENT

This invention was made with Government support under contract number W56HZV-05-C-0724 awarded by the United States Army. The Government has certain rights in this invention.

### TECHNICAL FIELD

The present invention relates to health management systems and methods, and more particularly relates to health management systems and methods with prognostic and diagnostic indictors.

### BACKGROUND

Modern electronic and mechanical systems, such as aircraft or other vehicle systems, are becoming increasingly complex. Health management systems are often used to monitor various health characteristics of vehicle systems. Several factors contribute to the evolution of the health states. These factors include damage accumulation, interaction between components in the system, deviation from design characteristics, and the influence of continuous or discrete events. These aspects can be modeled and evaluated using prognostic and diagnostic indictors in an effort to predict faults in the vehicle system. However, the complexities of modem electronic and mechanical systems have led to increasing needs for more sophisticated health systems. Information about potential faults enables such faults to be addressed before issues arise. In general, this information may provide support for an operator or other individual for use in making decisions regarding future maintenance, operation, or use of the system, and/or for use in making other decisions.

One type of mechanical system in which prognosis and fault detection is of particular importance is aircraft systems. In aircraft systems, prognosis and diagnostic fault detection can detect potential faults such that they can be addressed before they result in serious system issues and possible in-flight shutdowns, take-off aborts, delays or cancellations. Aircraft systems to be monitored include various types of operational systems comprising subsystems, components and sensors. Designers are continually attempting to provide health management systems and methods with improved fault detection and prediction, particularly in a more cost effective and simpler manner.

Accordingly, it is desirable to provide improved health management systems and methods for monitoring the health of an electronic or mechanical system. Furthermore, other desirable features and characteristics of the present invention will become apparent from the subsequent detailed description of the invention and the appended claims, taken in conjunction with the accompanying drawings and this background of the invention.

### BRIEF SUMMARY

In accordance with an exemplary embodiment, a system for monitoring the health of a component includes a memory configured to store a health management system for evaluating the health of the component. The health management system includes a first prognostic module, a first diagnostic module, a first failure mode module, and a first functional module. A processor is coupled to the memory and configured to retrieve the health management system from the memory; receive a first prognostic indicator associated with the health of the component; determine a first predicted diagnostic indicator based on the prognostic indicator with the prognostic module; determine a first failure mode probability based on the first predicted diagnostic indicator with the diagnostic module; determine a first failure mode vector based on the first failure mode probability with the failure mode module; generate a first functional output based on the first failure mode vector with the first functional mode module; and provide the first functional output to an operator.

In accordance with another exemplary embodiment, a system is provided for monitoring the health of a component. The system includes a memory configured to store a health management system; and a processor coupled to the memory. The system is configured to retrieve the health management system from the memory; receive a first observed diagnostic indictor associated with the health of the component; receive a first predicted diagnostic indictor associated with the health of the component; determine a first failure mode probability associated with the first observed diagnostic indicator and the first predicted diagnostic indicator; generate a first functional output based on the first failure mode probability; and provide the first functional output to an operator.

In accordance with yet another exemplary embodiment, a method is provided for monitoring the health of a component. The method includes the steps of receiving first predicted diagnostic indictors associated with the health of the component; determining first failure mode probabilities based on the first predicted diagnostic indictors; generating a functional output based on the first failure mode probabilities; and providing the functional output to an operator.

### BRIEF DESCRIPTION OF THE DRAWINGS

FIG. 1 is a system diagram of a monitoring system in accordance with an exemplary embodiment;

FIG. 2 is a functional block diagram of a heath management system of the system of FIG. 1 in accordance with an exemplary embodiment; and

FIG. 3 is a flowchart of a process for evaluating the health of a unit in accordance with an exemplary embodiment of the present invention.

### DETAILED DESCRIPTION

Broadly, exemplary embodiments discussed herein include a health management system of a monitoring system that monitors the health of a component such as a line replaceable unit of an aircraft. The health management system receives prognostic indictors from the line replaceable unit and identifies predicted diagnostic indictors based on the prognostic indictors. The health management system subsequently determines a failure mode and/or functional output based on the predicted diagnostic indictors.

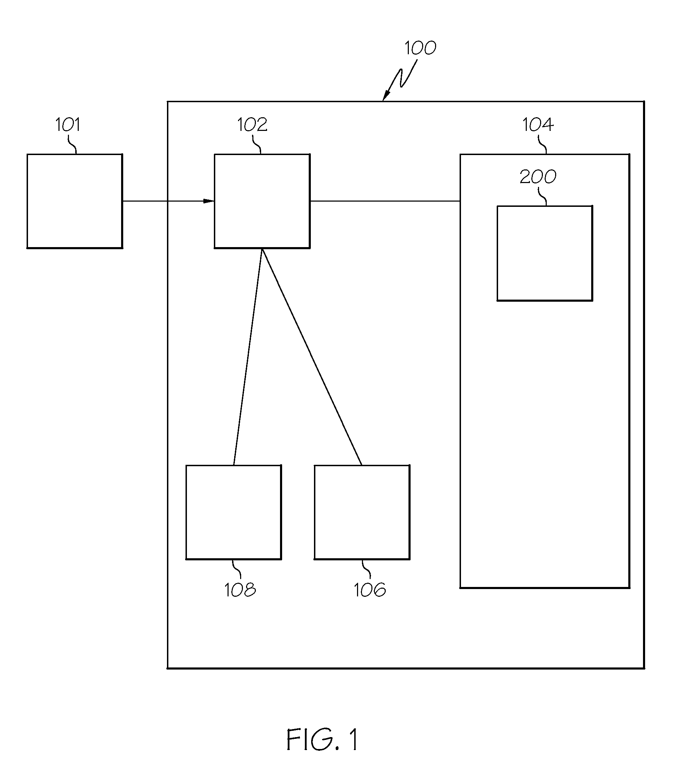

FIG. 1 is a system diagram of a monitoring system 100 in accordance with an exemplary embodiment. In this embodiment, the monitoring system 100 is an aircraft monitoring system 100, although many of the embodiments discussed herein are also applicable to more general vehicle systems as well as other types of systems. In an exemplary embodiment, the monitoring system 100 forms part of an aircraft system and monitors the health of a line replaceable unit 101. However, the health management system 200 can be associated with any number of line replaceable units or other types of units.

In the depicted embodiment, the monitoring system 100 includes a processor 102, a memory 104, an interface 106, and a storage device 108. The processor 102 performs the computation and control functions of the monitoring system 100 or portions thereof, and may comprise any type of processor or multiple processors, single integrated circuits such as a microprocessor, or any suitable number of integrated circuit devices and/or circuit boards working in cooperation to accomplish the functions of a processing unit. During operation, the processor 102 executes a health management system 200, which can include one or more programs stored within the memory 104 and, as such, controls the operation of the monitoring system 100. In particular and as further described below, the processor 102 receives the diagnostic indictors and prognostic indictors from the line replaceable unit 101 and executes the health management system 200 to generate failure modes and functional outputs associated with health of the line replaceable unit 101. It will be appreciated that the monitoring system 100 may also differ from the embodiment depicted in FIG. 1, for example in that the monitoring system 100 may be coupled to or may otherwise utilize one or more remote computer systems and/or other control systems.

As referenced above, the memory 104 stores the health management system 200, which may include a program to be executed. The memory 104 can be any type of suitable memory. This would include the various types of dynamic random access memory (DRAM) such as SDRAM, the various types of static RAM (SRAM), and the various types of non-volatile memory (PROM, EPROM, and flash). The memory 104 may be a single type of memory component or may be composed of many different types of memory components. In addition, the memory 104 and the processor 102 may be distributed across several different computers that collectively comprise the monitoring system 100. For example, a portion of the memory 104 may reside on a computer within a particular apparatus or process, and another portion may reside on a remote computer.

The interface 106 allows communication to and from the monitoring system 100, for example to and from a system operator and/or another computer system. The interface 106 can be implemented using any suitable method and apparatus. The interface 106 can include one or more network interfaces to communicate within or to other systems or components, and/or one or more terminal interfaces to communicate with technicians. In one embodiment, the interface 106 includes a visual display. For example, in certain embodiments, the interface 106 may include a liquid crystal (LCD) display, another type of computer display, and/or any one of a number of different types of displays, user interfaces, and/or presentation layers in which decision support output can be presented to such a user of the monitoring system 100 of FIG. 1 and/or an operator of the vehicle for which the monitoring system 100 and the health management system 200 is being implemented or used.

The storage device 108 can be any suitable type of storage apparatus, including direct access storage devices such as hard disk drives, flash systems, floppy disk drives, optical disk drives, and other computer readable media. In one exemplary embodiment, the storage device 108 is a program product stored on a signal bearing medium from which memory 104 can receive and store a program, for example, a program associated with the health management system 200. Examples of signal bearing media include: recordable media such as floppy disks, hard drives, memory cards and optical disks, and transmission media such as digital and analog communication links.

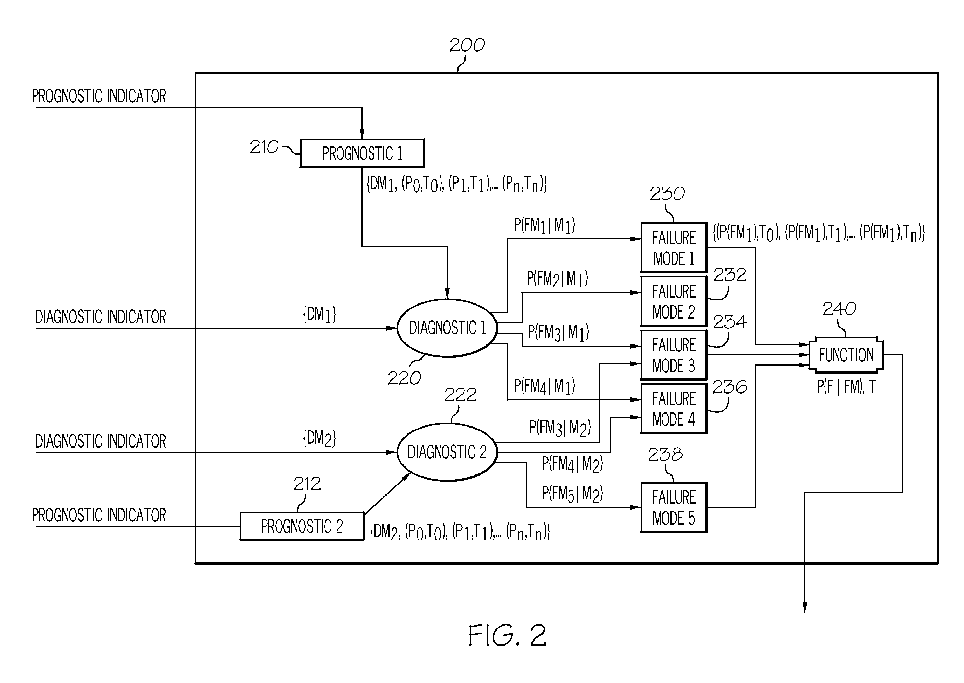

FIG. 2 is a functional block diagram of a heath management system 200 of the monitoring system 100 of FIG. 1 in accordance with an exemplary embodiment. Reference is additionally made to FIG. 1. As noted above, a portion or all of the health management system 200 may be stored in the memory 104 of the monitoring system 100 discussed above and executed by the processor 102.

The health management system 200 includes a number of models, data structures or algorithms that are referred to herein as "modules," and FIG. 2 describes the hierarchy and relationships between these modules. As will be discussed in further detail below, the health management system 200 includes one or more prognostic indictor modules 210, 212, one or more diagnostic indictor modules 220, 222, one or more failure mode modules 230, 232, 234, 236, 238, and one or more functional modules 240. Although FIG. 2 only shows two prognostic indictor modules 210, 212, two diagnostic indictor modules 220, 222, five failure mode modules 230, 232, 234, 236, 238, and one functional module 240, any number or combination of these modules and/or additional modules may be provided.

The diagnostic indictor modules 220, 222 receive diagnostic indictors from the line replaceable unit 101 via the processor 102. In one exemplary embodiment, each diagnostic indictor is generally a binary state that indicts or exonerates a belief in a particular failure mode at the present time. The failure mode generally refers to the various ways in which a component of the line replaceable unit 101 can fail. In other embodiments, the diagnostic indictors can have more than two states. In one exemplary embodiment, the diagnostic indictors may also be referred to as current or observed diagnostic indictors since they represent diagnostic indictors from the line replaceable unit 101 in real time.

The diagnostic indictor modules 220, 222 each generally represent one or more models, algorithms or data structures executed by the processor 102 to associate the diagnostic indictors with the appropriate failure mode module 230, 232, 234, 236, 238. In the depicted exemplary embodiment, the processor 102 processes the first diagnostic indicators with the first diagnostic indictor module 220 and the second diagnostic indicators with the second diagnostic indictor module 222. Moreover, diagnostic indictors of the first diagnostic module 220 are associated with the first, second, third, and fourth failure mode modules 230, 232, 234, 236. In other words, the first diagnostic indictors may indicate one of four failure modes. The second diagnostic indictors of the second diagnostic indictor module 222 are associated with the third, fourth, and fifth failure mode indictor modules 234, 236, 238.

Using the diagnostic indictor modules 220, 222, a probability of a particular failure mode based on the diagnostic indictor is determined or identified. The failure mode probability may be represented as P(FMx|My), where x and y represent the particular failure mode and diagnostic indictor, respectively. For example, P(FM₂|M₁) refers to the probability of the second failure mode given the first diagnostic indictor.

As noted above, the health management system 200 further includes prognostic indictor modules 210, 212, including a first prognostic indictor module 210 and a second prognostic indictor module 212. As also noted above, the monitoring system 100 receives prognostic indictors from the line replaceable unit 101.

In one exemplary embodiment, the prognostic indictors are associated with predicted diagnostic indictors using the prognostic indictor modules 210, 212 to produce predicted diagnostic indictors over time. For example, the predicted diagnostic indictors may be in the form of {DM₁, (P₀,T₀), (P₁,T₁),... (Pₙ,Tₙ)}, which represents the probability of the first diagnostic indictor at time 0, the probability of the first diagnostic indictor at time 1, and so on. As shown, the first prognostic indictor module 210 is associated with the first diagnostic indictor module 220 and determines first predicted diagnostic indictors. Similarly, the second prognostic indictor module 212 is associated with the second diagnostic indictor module 222 and determines second predicted diagnostic indictors. In a further embodiment, the monitoring system 100 may receive parametric indictors from which the predicted diagnostic indictors may be identified.

In accordance with an exemplary embodiment, the diagnostic indictor modules 220, 222 further determine the failure mode probabilities with the predicted diagnostic indictors. This enables consideration of the prognostic indictors using the code and/or algorithms associated with the diagnostic indictors. In many conventional health management systems, the prognostic indictors are used to directly predict failure modes and require specific algorithms for this purpose. The conventional mechanism of using diagnostic indictors and prognostic indictors to respectively diagnose and predict failure modes may be both time consuming and expensive. The approach described here allows the failure characteristics of the monitored equipment to be modeled, allowing generalized algorithms to draw conclusions based on received diagnostic and prognostic evidence.

Each failure mode module 230, 232, 234, 236, 238 is typically one or more models, algorithms or data structures associated with a failure mode. In general, the failure mode modules 230, 232, 234, 236, 238 may collectively represent a failure mode ambiguity group in which the failure modes probabilities from the various diagnostic indictor modules 220, 222 serve to disambiguate the failure modes. As such, the failure mode modules 230, 232, 234, 236, 238 are used to fuse the failure mode probabilities determined with the diagnostic monitor modules 220, 222 to identify predicted failure mode vectors. As one example, the failure mode vectors of the first failure mode indictor 230 can be represented as {(P(FM₁,T₀), (P(FM₁,T₁),... (P(FM₁),Tₙ)}, where P(FM₁,T₀) is the probability of the first failure mode at time 0, (P(FM₁,T₁) is the probability of the first failure mode at time 1, and so on. Similarly, the second, third, fourth, and fifth failure mode modules 232, 234, 236, 238 produce failure mode vectors associated with their respective failure modes. In general, the failure mode vectors provide the current health of the line replaceable unit 101 and predict future deterioration. By using the predicted diagnostic indictors, the confidence of the accuracy of failure mode vectors may be increased because the conclusion was reached using different data and knowledge sources. One advantage of this approach is that as new algorithms are developed, they can be added to the system architecture with low risk to the remaining system.

A variety of methods may be used for failure diagnosis. They include such methods as time series analysis, fuzzy logic methods, neural networks, case-based reasoning, probability reasoning, and a combination of the above methods. In addition to the predicted diagnostic indictors and observed diagnostic indictors, the failure mode modules 230, 232, 234, 236, 238 may also use other system variables to determine the failure mode probabilities, including environmental conditions and/or past or present operational variables. In further embodiments, the health monitoring system 200 may determine failure mode probabilities without observed diagnostic indicators, i.e., relying primarily on predicted diagnostic indicators identified from the prognostic indicators.

A functional module 240 identifies a functional output based on the failure mode probability vectors. The functional module 240 is typically one or more algorithms or data structures that associate one or more failure mode vectors with one or more functional outputs. The functional output may be provided to an operator, for example, via the interface 106, or stored in the memory 104 or storage device 108. In general, the functional output may be an assessment of the design function of one or more components of the line replaceable unit 101, and as such, may include the functional availability. The functional availability may indicate a current assessment or a future state assessment.

In further embodiments, the functional output may trigger remedial action to address any failure in the line replaceable unit 101. The functional output typically includes an identification of the various functions likely affected by the failure mode. The functional output can be used to determine a repair window in which corrective action should be taken in anticipation of predicted future deterioration and/or appropriate corrective action. The functional output can be used to determine when deterioration is predicted to justify removal or shut-down of the line replaceable unit 101.

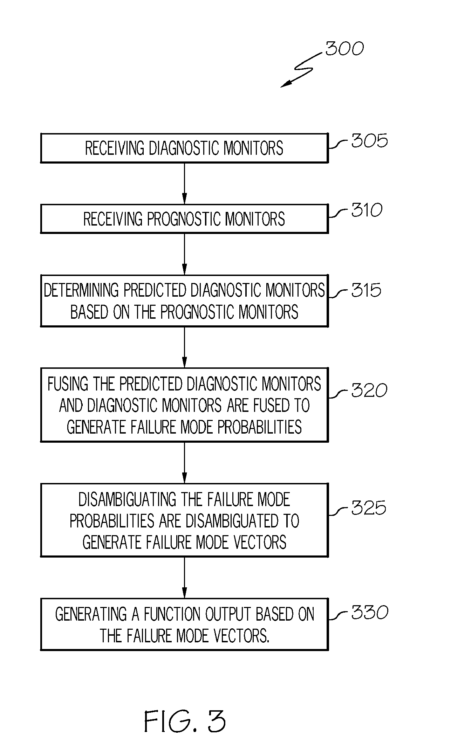

FIG. 3 is a flowchart of a health management method 300 in accordance with an exemplary embodiment. The health management method 300 can be implemented, for example, with the monitoring system 100 and health management system 200 of FIGS. 1 and 2, which are additionally referred to below.

As shown in FIG. 3, the method 300 begins with a first step 305 of receiving diagnostic indictors from the system or component to be evaluated, such as the line replaceable unit 101 of FIG. 1. In a second step 310, prognostic indictors are received, and in a third step 315, predicted diagnostic indictors are identified or determined based on the prognostic indictors. In various embodiments, the second step occurs prior to, after, or simultaneously with the first step. In a fourth step 320, the predicted diagnostic indictors and diagnostic indictors are fused to identify failure mode probabilities. In another embodiment, the failure mode probabilities are not determined using observed diagnostic indicators. In a fifth step 325, the failure mode probabilities are disambiguated to determine failure mode vectors or fused failure mode probabilities over time. In a sixth step 330, a functional output is generated based on the failure mode vectors.

In one exemplary embodiment, the aircraft monitoring system 100 can be used in connection with an aircraft or a fleet of aircraft. In another embodiment, the monitoring system 100 can be used in connection with an automobile or a fleet of automobiles. In other embodiments, the monitoring system 100 can be used in connection with various other different types of vehicles or vehicle systems and/or combinations of any of these and/or other different types of vehicles and/or vehicle systems. Moreover, the monitoring system 100 may be used in connection with any type of mechanical or electrical system. For example, the monitoring system 100 may be used with vehicles (e.g. airplanes, automobiles, ships, armored personnel carriers), industrial equipment (e.g. HVAC, chillers, pumps, motors), or other types of equipment.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A system (100) for monitoring the health of a component (101), comprising:
a memory (104) configured to store a health management system (200) for evaluating the health of the component (101), the health management system (200) comprising a first prognostic module (210), a first diagnostic module (220), a first failure mode module (230), and a first functional module (240); and
a processor (102) coupled to the memory (104) and configured to
retrieve the health management system (200) from the memory (104);
receive a first prognostic indicator associated with the health of the component (101);
determine a first predicted diagnostic indicator based on the prognostic indicator with the prognostic module (220);
determine a first failure mode probability based on the first predicted diagnostic indicator with the first diagnostic module (230);
determine a first failure mode vector based on the first failure mode probability with the failure mode module (230);
generate a first functional output based on the first failure mode vector with the first functional mode module (240); and
provide the first functional output to an operator.

2. The system (100) of claim 1, wherein the first predicted diagnostic indictor comprises probabilities of first diagnostic indictors over time.

3. The system (100) of claim 1, wherein the first failure mode vector comprises probabilities of a first failure mode over time.

4. The system (100) of claim 1, wherein the health management system (200) further comprises a second prognostic module (212) and a second diagnostic module (222), and the processor (102) is further configured to
receive a second prognostic indictor;
determine a second predicted diagnostic indictor based on the second prognostic indictor with the second prognostic module (212);
determine a second failure mode probability based on the second predicted diagnostic indicator with the second diagnostic module (222); and
determine the first failure mode vector based on the first failure mode probability and the second failure mode probability.

5. The system (100) of claim 1, wherein the processor (102) is further configured to:
receive a first observed diagnostic indicator; and
determine the first failure mode probability based on the first predicted diagnostic indicator and the first observed diagnostic indicator.

6. The system (100) of claim 1, wherein the functional output includes a corrective action corresponding to a first failure mode of the first failure mode module (230).

7. The system (100) of claim 1, wherein the functional output includes an indication of the most likely failure mode.

8. The system (100) of claim 1, wherein the functional output includes a prediction of deterioration in the component (101).

9. The system (100) of claim 1, further comprising a visual display coupled to processor (102) and configured to display the functional output to the operator.
